# EUROPÄISCHE PATENTSCHRIFT

(11) **EP 0 792 207 B1**
(45) Veröffentlichungstag und Bekanntmachung des Hinweises auf die Patenterteilung: **31.10.2001**
(21) Anmeldenummer: 95935749.2
(22) Anmeldetag: 14.11.1995
(51) Int. Cl.: B29C 47/16

(54) **BREITSCHLITZDÜSE FÜR EINEN EXTRUDER**
SHEET DIE FOR AN EXTRUDER
FILIERE PLATE POUR EXTRUDEUSE

(30) Priorität: 15.11.1994 AT 211194
(43) Veröffentlichungstag der Anmeldung: 03.09.1997
(73) Patentinhaber: Svoboda, Bruno, 1140 Wien (AT)
(72) Erfinder: Svoboda, Bruno, 1140 Wien (AT)
(74) Vertreter: Gibler, Ferdinand, Dipl.-Ing. Dr. techn.
(86) Internationale Anmeldenummer: AT9500218
(87) Internationale Veröffentlichungsnummer: WO9614974

(56) Entgegenhaltungen:
- WO-A-92/07121
- FR-A- 2 217 148
- FR-A- 2 703 294
- US-A- 3 830 610
- US-A- 4 439 125
- PATENT ABSTRACTS OF JAPAN vol. 011 no. 071 (M-567) ,4.März 1987 & JP,A,61 227010 (PURAMATSUKU KK) 9.Oktober 1986,
- PATENT ABSTRACTS OF JAPAN vol. 008 no. 280 (M-347) ,21.Dezember 1984 & JP,A,59 150720 (SUMITOMO KAGAKU KOGYO KK) 29.August 1984,
- PATENT ABSTRACTS OF JAPAN vol. 013 no. 300 (M-848) ,11.Juli 1989 & JP,A,01 093315 (KOBE STEEL LTD) 12.April 1989,

## Beschreibung

Die Erfindung betrifft eine Extrudiereinrichtung mit einer Plastifizierschnecke, einer Breitschlitzdüse, einer Vielzahl von unabhängig voneinander steuerbaren Sperrelementen und einer Regeleinrichtung zur Steuerung der Sperrelemente.

Nach den bekannten Extrusionsverfahren der in Rede stehenden Art wird Rohmaterial von einer Plastifiziereinrichtung, vorzugsweise einem Extruder, aufbereitet und entweder kontinuierlich oder diskontinuierlich durch eine am Extruderausgang befestigte Düse mit rechteckigem Austrittsspalt ausgestoßen. Die Dicke und Breite des ausgeformten Bandes wird durch die Dimension des Austrittsspaltes der Breitschlitzdüse bestimmt.

Für die kontinuierliche Extrusion von Folien oder Platten sind Vorrichtungen bekannt, bei welchen die Austrittspaltlänge durch Abdecken derselben mittels längsverstellbarer Leisten verändert werden kann. Außerdem sind Vorrichtungen bekannt, bei welchen die Austrittsspaltbreite durch Verstellung des Mundstückes bzw. der Düsenlippe verändert werden kann. Diese Einrichtungen dienen jedoch nur dazu, von einer Produktdimension auf eine andere umzustellen.

Bevorzugt soll die Erfindung die Herstellung von Formteilen im Prägeverfahren betreffen. Dabei wird mit Hilfe einer Breitschlitzdüse, welche an der Austrittsöffnung eines Schneckenspritzaggregates befestigt ist, ein Schmelzeband zwischen die geöffneten Hälften eines formgebenden Werkzeuges derart eingebracht, daß während des Schmelzeaustrages die Breitschlitzdüse horizontal über das Formnest bewegt wird. Nach Beendigung des Austragsvorganges wird das Schmelzeband am Düsenrand mit einer Schneidevorrichtung abgetrennt, sodann werden mit Hilfe einer Formschließvorrichtung die Formhälften geschlossen und die eingebrachte Schmelze zum Formteil verpreßt. Mit solchen bekannten Einrichtungen ist es derzeit nur möglich, über die gesamte Länge eine gleiche Breite aufweisende Schmelzebänder zu erzeugen. Da die herzustellenden Formteile sehr unregelmäßige Konturen aufweisen können, ist die Materialverteilung beim Preßvorgang sehr mangelhaft, was zu Wanddickenunterschieden, erhöhtem Austrieb, und nicht vollständig ausgeformten Teilen führen kann.

Um diese Nachteile zu verringern, sind Vorrichtungen bekannt, bei denen die Düse zusätzlich zu der Verfahrbewegung in axialer Richtung auch in Querrichtung verfahrbar ist. Dies hat jedoch den Nachteil einer Massenanhäufung bei der Querbewegung und damit eine ungleichförmige Masseverteilung beim Verpressen.

Die US-PS-4 439 125 offenbart eine Extrudiereinrichtung mit einer Plastifizierschnecke, einer Breitschlitzdüse und einer Vielzahl von benachbarten, unabhängig voneinander steuerbaren Sperrelementen, die innerhalb des Extrudatflußkanals von der Extrudier-Breitschlitzdüse beabstandet angeordnet sind, wobei die Sperrelemente - in Extrudatströmrichtung gesehen - vor dem Austrittsspalt der Düse angeordnet sind. Bei Verstellen der Sperrelemente kann sich Restmasse hinter einem oder mehreren Sperrelementen ansammeln, die beim nachfolgenden Öffnen derselben wieder zum Gesamtstrom beitragen. Weiters ist eine Regeleinrichtung vorgesehen, welche die Sperrelemente so einstellt, daß die gewünschten Eigenschaften des Extrudierprofiles erreichbar sind, eine Beeinflussung der Schneckenvortriebsgeschwindigkeit in Abhängigkeit vom Austrittsspaltquerschnitt wird aber nicht vorgenommen.

Ziel der Erfindung ist es, eine Extrudiereinrichtung der eingangs erwähnten Art vorzuschlagen, die es ermöglicht, ein Schmelzeband mit über dessen Länge veränderbarem Querschnitt herzustellen.

Erfindungsgemäß wird dies bei einer Extrudiervorrichtung der eingangs erwähnten Art durch die kennzeichnenden Merkmale des Anspruches 1 erreicht.

Durch die vorgeschlagene Maßnahme wird die Düse im Bereich des Austrittspaltes durch ein Register einzelner Sperrelemente verschlossen. Die Sperrelemente können einzeln angesteuert und bewegt werden, wobei die beiden Endstellungen jedes Elementes die Austrittsspaltbreite in dessen Bereich entweder voll verschließen oder voll öffnen und jede Zwischenstellung die Austrittsspaltbreite verändert.

Die Anzahl der Sperrelemente hängt von deren Breite und der Länge des Austrittsspaltes ab. Z.B. können bei einer Düse mit 500 mm Austrittsspaltlänge 25 Sperrelemente einer Breite von je 20 mm vorgesehen sein. Beim Einbringen des Schmelzebandes in ein Prägewerkzeug werden bei konstanter Lineargeschwindigkeit des Spritzaggregates in Abhängigkeit von der Teilekontur einzelne Sperrorgane geöffnet oder geschlossen und somit die Kontur des Schmelzebandes an die Kontur des herzustellenden Teiles - z.B. Innenverkleidungen von Autotüren - angepaßt. Durch teilweises Öffnen bzw. Schließen der Sperrelemente können örtliche Verdickungen oder Verdünnungen hergestellt werden. Durch Schließen und Öffnen von im Mittenbereich liegenden Sperrorganen ist es möglich, Aussparungen herzustellen. Werden nur die im Randbereich angeordneten Sperrorgane verwendet, können zwei Teile in einem Arbeitsgang hergestellt werden.

Durch die Merkmale des Anspruches 2 ergibt sich der Vorteil einer besonders genauen Anpassung der Austrittsspaltlänge der Breitschlitzdüse an die jeweiligen Erfordernisse.

Durch die Merkmale des Anspruches 3 ergibt sich die Möglichkeit einer Veränderung der Austrittsspaltbreite und somit einer örtlichen Verdickung oder Verdünnung des Schmelzebandes.

Durch die Merkmale des Anspruchs 4 ergibt sich eine Ausführungsform, welche durch einfache Weise eine Abdichtung der einzelnen Sperrelemente zum Düsenspalt ermöglicht.

Durch die Merkmale des Anspruches 5 kann in besonders effizienter Weise bei einer äußerst platzsparenden Konstruktion eine optimale Dichtwirkung erreicht werden.

Durch die Merkmale des Anspruches 6 ergibt sich eine sehr einfache Lösung, bei der die beim Extrudieren auftretenden Kräfte von den Antrieben der schwenkbar gehaltenen Wandteile aufgenommen werden müssen.

Durch die Merkmale des Anspruches 7 ergibt sich der Vorteil, daß die Schmelze-Austrittsgeschwindigkeit auch bei einer Änderung des Austrittsquerschnittes konstant gehalten werden kann.

Die Merkmale des Anspruches 8 ermöglichen eine sehr einfache Steuerung der Sperrorgane der einzelnen Kanäle der Breitschlitzdüse.

Die Erfindung wird nun anhand der Zeichnung näher erläutert. Dabei zeigen:
Fig. 1 den Aufbau einer Extrusionsstrecke mit längsverfahrbaren Extruder und einer längssverschiebbaren Schnecke, bei welcher eine erfindungsgemäße Breitschlitzdüse samt zugehöriger Steuerung eingesetzt ist,
Fig. 2 einen Querschnitt durch eine erfindungsgemäße Breitschlitzdüse mit geschlossenem Kanal, und
Fig. 3 einen Querschnitt durch diese Breitschlitzdüse mit geöffnetem Kanal und analoger Wegsteuerung der Sperrelemente,
Fig. 4 einen Schnitt entlang der Linie A-B der Fig. 3,
Fig. 5 einen Querschnitt durch eine weitere erfindungsgemäße Ausführungsform einer Breitschlitzdüse mit geschlossenem Kanal,
Fig. 6 einen Querschnitt durch diese Ausführungsform mit geöffnetem Kanal,
Fig. 7 einen Querschnitt durch eine dritte erfindungsgemäße Ausführungsform einer Breitschlitzdüse mit geschlossenem Kanal,
Fig. 8 einen Querschnitt durch die Ausführungsform mit geöffnetem Kanal,
Fig. 9 schematisch die Füllung einer Vertiefung mit einem Extrudat und
Fig. 10 schematisch verschiedene Möglichkeiten der Herstellung von extrudierten Strängen bei Verwendung erfindungsgemäßer Breitschlitzdüsen.

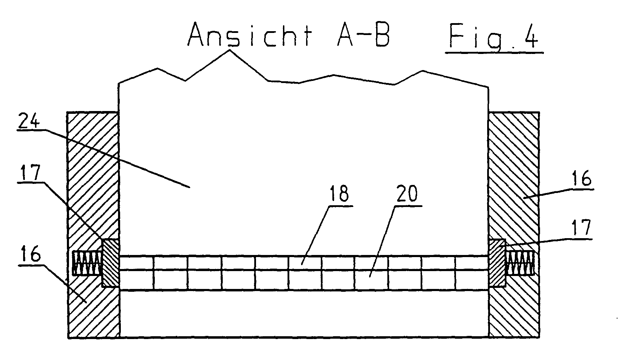

Wie am besten in Fig. 4 dargestellt, sind in Austrittsspaltlängsrichtung vorzugsweise über den gesamten Austrittsspalt der Breitschlitzdüse 4 eine Vielzahl von Sperrelementen 18 nebeneinander - Mann an Mann - angeordnet. Die Breitschlitzdüse 4 ist an ihren Seitenbereichen durch federnd gehaltene Wandteile 17 begrenzt, die in Backen 16 gehalten sind.

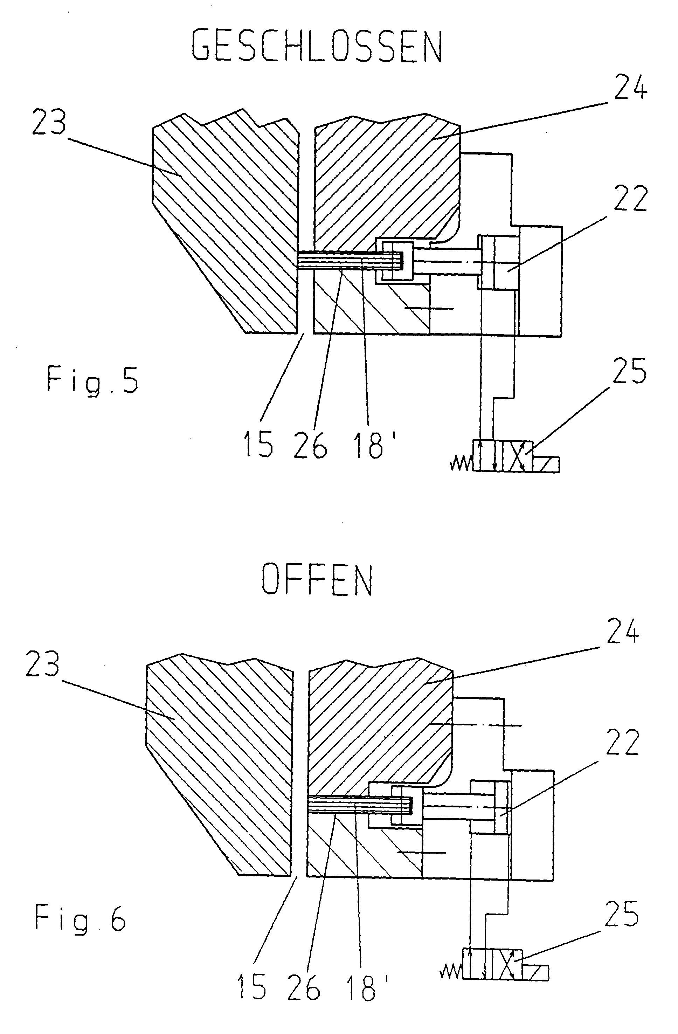

Bei der Ausführungsform nach den Fig. 5 und 6 sind die Sperrelemente 18' als Bleche ausgebildet, die in einer Nut 26 der Wände 23, 24 des Düsenkörpers geführt sind. Bei dieser Lösung kann das Sperrorgan 18' gegen die jeweils gegenüberliegende Wand 23, 24 bewegt, und an dieser dichtend zur Anlage gebracht werden, um den betreffenden Kanal 15 zu sperren.

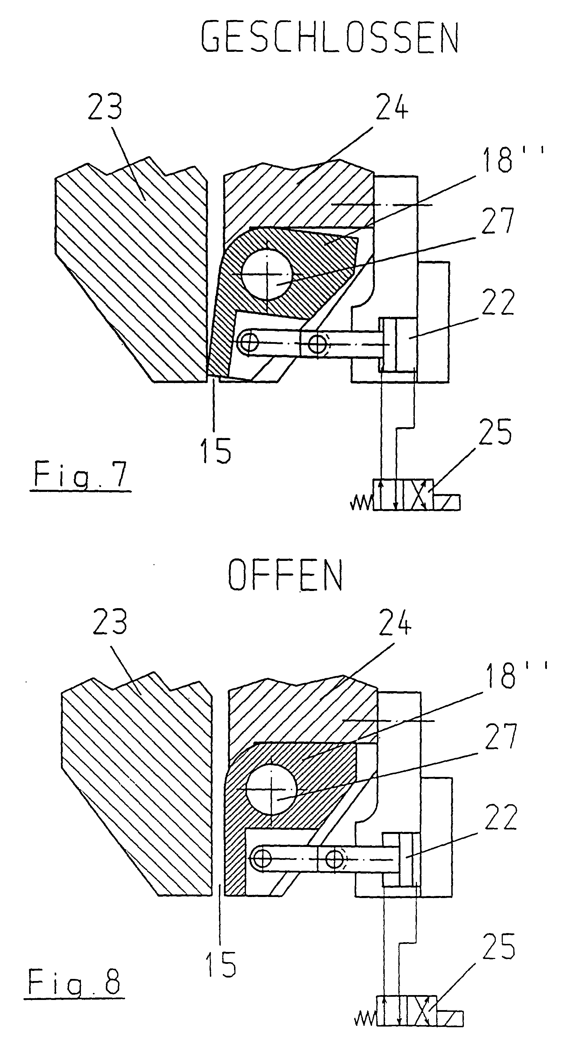

Bei der Ausführungsform nach den Fig. 7 und 8 sind die Sperrorgane 18" durch um eine Achse 27 schwenkbar gehaltene Wandteile gebildet, die mittels eines Antriebes 22 dichtend an der gegenüberliegenden Wand 23 zur Anlage bringbar sind.

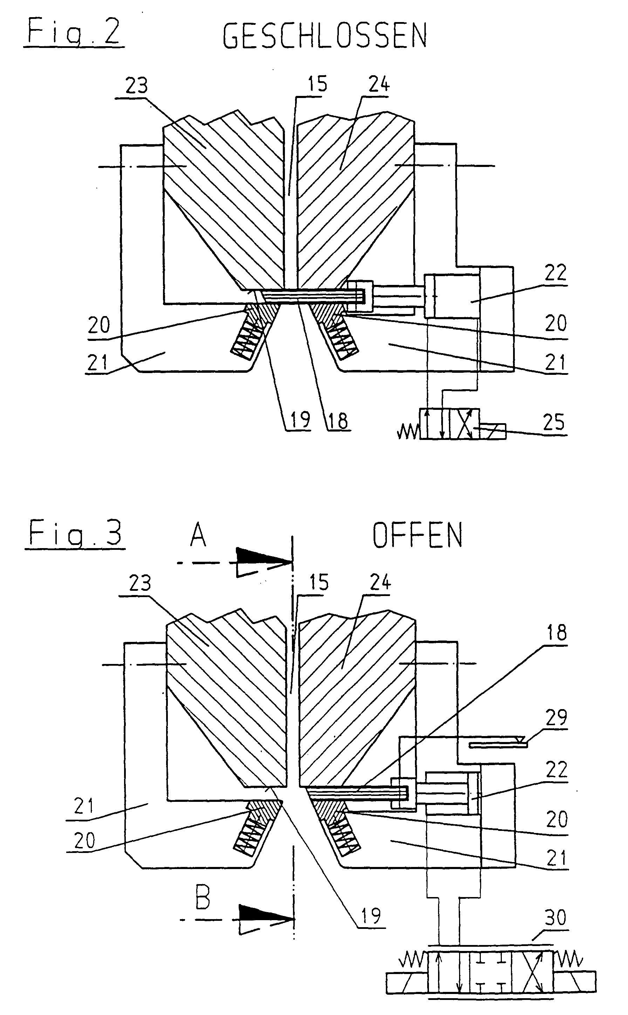

Entsprechend der Ausführungsform nach Fig.2 und Fig. 3, anhand welcher die Erfindung im folgenden näher erklärt wird, sind die Sperrelemente 18 durch Bleche gebildet, die zwischen der Stirnseite 19 und Gegenhaltern 20 verschiebbar geführt sind. Dabei sind die Gegenhalter 20 federnd in Stützarmen 21 gehalten.

Jedes der Sperrorgane 18 ist hier, ebenso wie bei den vorher erwähnten Ausführungsformen, mit einem separaten Antrieb 22 verbunden, welcher Antrieb 22 durch einen elektromagnetischen oder hydraulischen Antrieb, wie dargestellt, gebildet sein kann, der über ein Steuerventil 25 bzw. 30 gesteuert wird. Die Steuerventile 25, 30 aller Sperrelemente 18 werden dabei wiederum von einer gemeinsamen Ansteuer-Einrichtung 12 betätigt. Durch eine derartige Anordnung einer Vielzahl von unabhängig voneinander steuerbaren Sperrelementen 18 ist es möglich, den Austrittsspalt einer Breitschlitzdüse 4 zumindest bereichsweise zu verschließen.

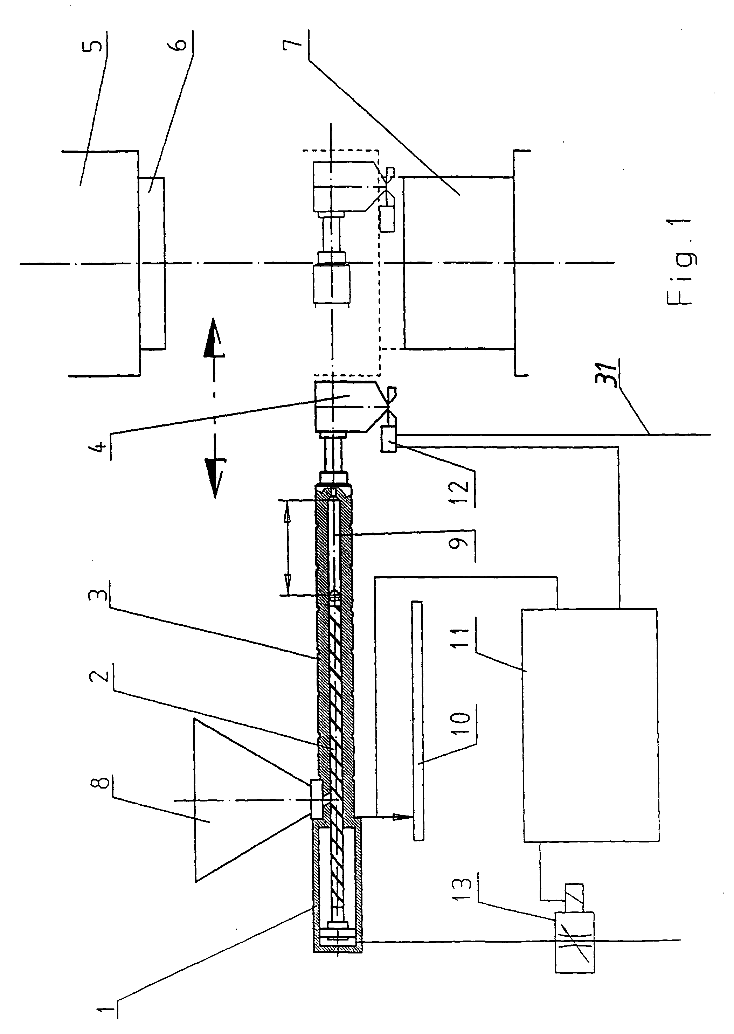

Die momentan erforderlichen Stellungen der einzelnen Sperrorgane 18 werden über einen Steuereingang 31 der Einrichtung 12 festgelegt (vgl. Fig.1). Neben der Ventilansteuerung dient die Einrichtung 12 auch zur Erfassung der tatsächlichen Stellungen der einzelnen Sperrorgane 18 und somit zur Bestimmung des momentanen Düsenaustrittsquerschnittes. Zu diesem Zweck ist für jedes Sperrorgan 18 eine Wegerfassung 29, die mit der Einrichtung 12 verbunden ist, vorgesehen.

Die Fig. 1 zeigt eine Extrusionsstrecke mit einer erfindungsgemäßen Breitschlitzdüse 4 auf einem Extruder. Bei diesem ist in einem Einspritzzylinder 1 eine Plastifizierschnecke 2 drehbar und axial verschiebbar gehalten, wobei noch ein Einfülltrichter 8 für das zu verarbeitende Granulat vorgesehen ist.

Die Plastifizierschnecke 2 erstreckt sich in einen Plastifizierzylinder 3 hinein, in dem das Granulat aufgeschmolzen und homogenisiert wird. Dabei bleibt im vordersten, bzw. einer Breitschlitzdüse 4 nächstgelegenen Bereich des Plastifizierzylinders 3 ein Dosiervolumen 9 vorgesehen. Wie strichliert angedeutet, ist der Einspritzzylinder 1 samt Plastifizierzylinder 3 axial verstellbar gehalten, sodaß die Breitschlitzdüse 4 über einen Formunterteil 7, der mit einem Formoberteil 6 zusammenwirkt, hinwegbewegt werden kann. Dabei ist der Formoberteil 6 an einem Preßstempel 5 gehalten.

Dabei ist eine Weg-Erfassungseinrichtung 10 zur Erfassung des Weges, den die Breitschlitzdüse 4 zurücklegt, vorgesehen, die mit einer Regelung 11 verbunden ist. Diese ist weiters mit der oben beschriebenen Einrichtung 12 verbunden, mit welcher der Austrittsquerschnitt der Breitschlitzdüse 4 erfaßt wird. Die Regelung 11 betätigt ein Hydraulikventil 13, das den Zustrom von Hydraulikflüssigkeit zum Einspritzzylinder 1 steuert, sodaß die Regelung 11 die Einspritzgeschwindigkeit des Extrudates in Abhängigkeit von zurückgelegtem Weg und Austrittsquerschnitt verändern und somit die Schicht-Stärke des Extrudates konstant halten bzw. verändern kann.

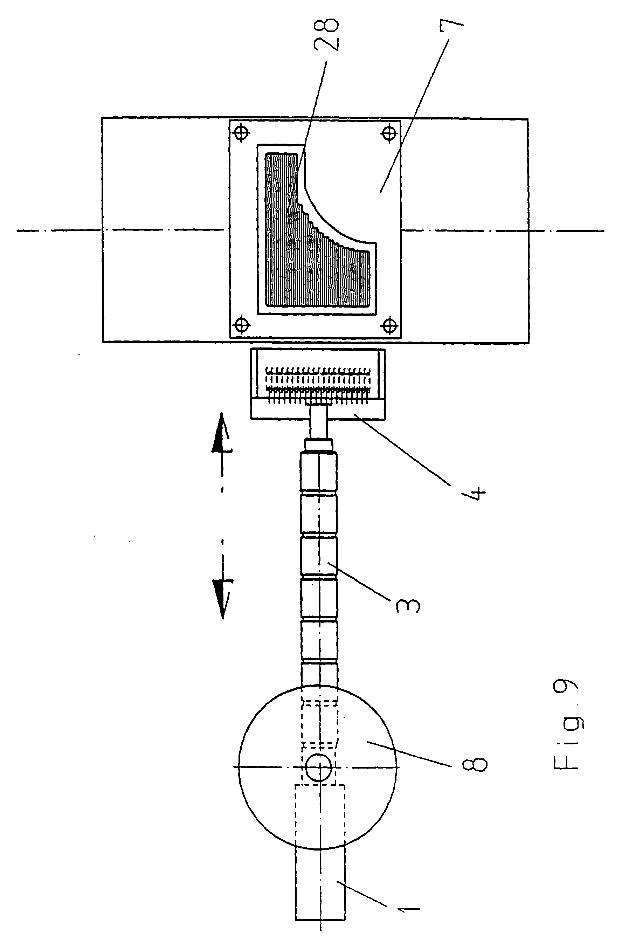

Wie aus der Fig. 9 zu ersehen ist, können durch entsprechende Ansteuerung der Antriebe 22 der einzelnen Sperrelemente 18, 18', 18" die den Sperrelementen zugeordneten Kanäle 15 derart verändert werden, daß ein Strang 28 aus extrudiertem Material in beliebiger Form erhalten werden kann, der in einen Formenunterteil 7 abgelegt wird. Durch entsprechendes Schließen oder Öffnen der einzelnen Kanäle 15 kann z.B. ein in seiner Breite beliebig gestalteter Strang erhalten werden, wie einen solchen bei 28 Fig. 9 zeigt.

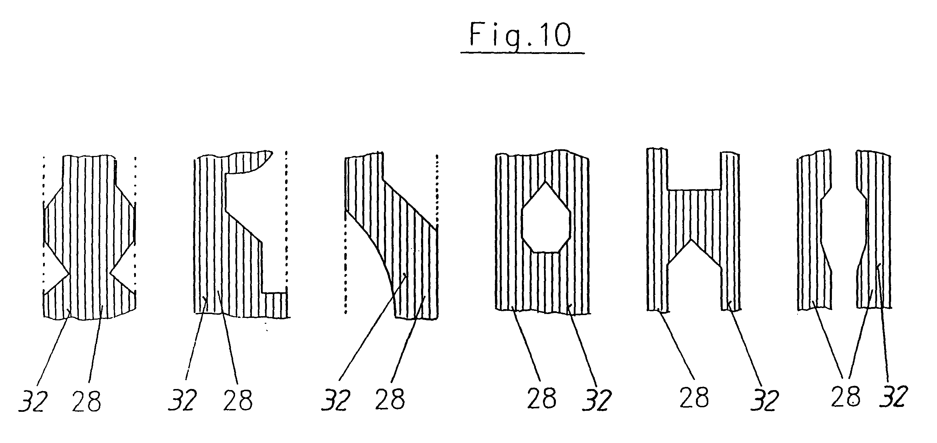

Die Fig. 10 zeigt schematisch verschiedene Möglichkeiten der Ausbildung von extrudierten Strängen anhand von Strangabschnitten 28. Die von den dünnen Linien 32 begrenzten Bereiche der Strangabschnitte 28 symbolisieren die den einzelnen Sperrelementen 18, 18', 18" zugeordneten Zonen; dort wo diese Linien fehlen, fehlt auch das Strangmaterial, die zugehörigen Sperrelemente waren während der Produktion dieses Strangabschnittes geschlossen. Zur Erzielung solcher unterschiedlich konfigurierter Strangbreiten kann ein digital gesteuerter Antrieb der Sperrelemente ausreichen, durch welchen diese lediglich zwischen einer OFFEN- und einer GESCHLOSSEN-Stellung verstellbar sind. Bei proportional arbeitenden Antrieben 22 der Sperrorgane 18, 18', 18" besteht auch die Möglichkeit, durch Verringerung des Austrittsquerschnittes einzelner Kanäle 15 die Dicke, bzw. Höhe des extrudierten Stranges in dem betreffenden Bereich eines Strangabschnittes 28 zu variieren.

## Patentansprüche

1. Extrudiereinrichtung mit einer Plastifizierschnecke (2), einer Breitschlitzdüse(4), einer Vielzahl von unabhängig voneinander steuerbaren Sperrelementen (18, 18', 18") und einer Regeleinrichtung (13) zur Steuerung der Sperrelemente (18, 18', 18"), **dadurch gekennzeichnet, daß** zur Veränderung der Breite des Extrudates der Austrittsspalt (15) der Breitschlitzdüse (4) durch die Vielzahl von unabhängig voneinander steuerbaren Sperrelementen (18, 18', 18") zur Gänze verschließbar ist, wobei zur Beeinflussung des Massedurchsatzes im Austrittsspalt (15) der Breitschlitzdüse (4) die Regeleinrichtung (13) die Schneckenvortriebsgeschwindigkeit proportional zum Austrittspaltquerschnitt regelt.

2. Extrudiereinrichtung nach Anspruch 1, **dadurch gekennzeichnet, daß** die Sperrelemente (18, 18', 18") von einem z.B. über ein Steuerventil (30) digital angesteuerten Antrieb, z.B. einer Kolbenzylindereinheit (22), lediglich zwischen einer OFFEN- und GESCHLOSSEN-Stellung antreibbar sind.

3. Extrudiereinrichtung nach Anspruch 1, **dadurch gekennzeichnet, daß** die Sperrelemente (18, 18', 18") von einem z.B. über ein Steuerventil (30) analog angesteuerten Antrieb, z.B. einer Kolbenzylindereinheit (22), zwischen einer OFFEN-und einer GESCHLOSSEN-Stellung in jeder beliebigen Zwischenstellung antreibbar sind.

4. Extrudiereinrichtung nach einem der Ansprüche 1, 2 oder 3, **dadurch gekennzeichnet, daß** die Sperrelemente (18) durch zwischen der Stirnseite (19) der Breitschlitzdüse (4) und gegebenenfalls federnd gehaltenen Gegenhaltern (20) geführten Blechen gebildet sind.

5. Extrudiereinrichtung nach Anspruch 1, 2 oder 3, **dadurch gekennzeichnet, daß** die Sperrelemente (18') im Auslaßbereich (15) der Breitschlitzdüse (4) in einem Teil einer Wand (24) der Breitschlitzdüse (4) verschiebbar geführt sind, und mittels eines Antriebes (22) gegen die zweite Wand (23) der Breitschlitzdüse (4) dichtend anpreßbar sind.

6. Extrudiereinrichtung nach Anspruch 1, 2 oder 3, **dadurch gekennzeichet, daß** die Sperrelemente (18") im Auslaßbereich der Breitschlitzdüse (4) in einem Teil einer Wand (24) der Breitschlitzdüse (4) schwenkbar gehalten und mittels eines Antriebes (22) gegen die zweite Wand (23) der Breitschlitzdüse (4) dichtend zur Anlage bringbar sind.

7. Extrudiereinrichtung nach einem der Ansprüche 1 bis 5, **dadurch gekennzeichnet, daß** die Regeleinrichtung (13) zur Regelung der Schneckenvortriebsgeschwindigkeit (Fig. 1) mit einer Einrichtung (12) zur Erfassung des momentanen Austrittsspaltquerschnittes der Breitschlitzdüse (4) verbunden ist.

8. Extrudiereinrichtung nach Anspruch 1 bis 7, **dadurch gekennzeichnet, daß** zur Erfassung des Weges der Linearbewegung der Breitschlitzdüse (4) ein Wegmeßsystem (10) vorgesehen ist, und jede Wegposition der Breitschlitzdüse (4) einem bestimmten Austrittsspaltquerschnitt zugeordnet werden kann.

## Claims

1. An extrusion device with a plastification screw (2), a flat-sheet die (4), a plurality of mutually independently controllable blocking elements (18, 18', 18") and a control device (13) for controlling the blocking elements (18, 18', 18"), **characterized in that** for the purpose of changing the width of the extrudate the die opening (15) of the flat-sheet die (4) can be completely closed off by the plurality of mutually independently controllable blocking elements (18, 18', 18"), with the control device (13) controlling the screw propulsion speed proportional to the cross section of the die opening for influencing the mass throughput in the die opening (15) of the flat-sheet die (4).

2. An extrusion device as claimed in claim 1, **characterized in that** the blocking elements (18, 18', 18") are drivable merely between an OPEN and CLOSED position by a drive triggered digitally by means of a control valve (30) for example, e.g. a piston-cylinder unit (22).

3. An extrusion device as claimed in claim 1, **characterized in that** the blocking elements (18, 18', 18") are drivable merely between and OPEN and CLOSED position in any desirable intermediate position by a drive triggered in an analogue manner by means of a control valve (30) for example, e.g. a piston-cylinder unit (22).

4. An extrusion device as claimed in one of the claims 1, 2 or 3, **characterized in that** the blocking elements (18) are formed by plates guided between the face side (19) of the flat-sheet die (4) and optionally resiliently held braces (20).

5. An extrusion device as claimed in claim 1, 2 or 3, **characterized in that** the blocking elements (18') are displaceably held in the outlet zone (15) of the flat-sheet die (4) in a part of a wall (24) of the flat-sheet die (4) and can be sealingly pressed against the second wall (23) of the flat-sheet die (4) by means of a drive (22).

6. An extrusion device as claimed in claim 1, 2 or 3, **characterized in that** the blocking elements (18") are held swivellably in the outlet zone of the flat-sheet die (4) in a part of a wall (24) of the flat-sheet die (4) and can be brought sealingly against the second wall (23) of the flat-sheet die (4) by means of a drive (22).

7. An extrusion device as claimed in one of the claims 1 to 5, **characterized in that** the control device (13) for controlling the screw propulsion speed (fig. 1) is connected with a device (12) for detecting the momentary die-opening cross section of the flat-sheet die (4).

8. An extrusion device as claimed in claim 1 to 7, **characterized in that** for detecting the path of the linear movement of the flat-sheet die (4) a path measuring system (10) is provided and every path position of the flat-sheet die (4) can be assigned to a certain die-opening cross section.

## Revendications

1. Installation d'extrusion avec une vis plastificatrice (2), une filière plate (4), une pluralité d'éléments d'obturation (18, 18', 18") pouvant être commandés séparément les uns des autres et un dispositif de régulation (13) pour la commande des éléments d'obturation (18, 18', 18"), **caractérisée en ce que** pour modifier la largeur de la matière extrudée, la fente de sortie (15) de la filière plate (4) peut être fermée totalement par la pluralité d'éléments d'obturation (18, 18', 18") pouvant être commandés séparément les uns des autres, le dispositif de régulation (13) régulant la vitesse d'avancement de la vis de manière proportionnelle à la section de la fente d'extrusion afin d'agir sur le débit de masse au niveau de la fente de sortie (15) de la filière plate (4).

2. Installation d'extrusion selon la revendication 1, **caractérisée en ce que** les éléments d'obturation (18, 18', 18") ne peuvent être entraînés qu'entre une position OUVERTE et une position FERMÉE par un entraînement commandé par exemple de façon numérique par une vanne de commande (30), par exemple un vérin (22).

3. Installation d'extrusion selon la revendication 1, **caractérisée en ce que** les éléments d'obturation (18, 18', 18") peuvent être entraînés entre une position OUVERTE et une position FERMÉE et dans toutes les positions intermédiaires souhaitées par un entraînement commandé par exemple de façon numérique par une vanne de commande (30), par exemple un vérin (22).

4. Installation d'extrusion selon l'une quelconque des revendications 1, 2 ou 3, **caractérisée en ce que** les éléments d'obturation (18) sont formés de tôles guidées entre la face frontale (19) de la filière plate (4) et des contre-appuis (20) supportés éventuellement de façon élastique.

5. Installation d'extrusion selon la revendication 1, 2 ou 3, **caractérisée en ce que** les éléments d'obturation (18') sont guidés de façon coulissante dans une partie d'une paroi (24) de la filière plate (4) au niveau de la zone de sortie (15) de la filière plate (4) et peuvent être appuyés de manière étanche par un entraînement (22) contre la deuxième paroi (23) de la filière plate (4).

6. Installation d'extrusion selon la revendication 1, 2 ou 3, **caractérisée en ce que** les éléments d'obturation (18") sont supportés de manière pivotante dans une partie d'une paroi (24) de la filière plate (4) au niveau de la zone de sortie (15) de la filière plate (4) et peuvent être appuyés de manière étanche par un entraînement (22) contre la deuxième paroi (23) de la filière plate (4).

7. Installation d'extrusion selon l'une quelconque des revendications 1 à 5, **caractérisée en ce que** le dispositif de régulation (13) est relié, en vue de la régulation de la vitesse d'avancement de la vis (Figure 1), avec un dispositif (12) destiné à capter la section de la fente de sortie de la filière plate (4) à un moment donné.

8. Installation d'extrusion selon les revendications 1 à 7, **caractérisée en qu**'en vue de mesurer le déplacement linéaire de la filière plate (4), il est prévu un système de mesure du déplacement (10) et chaque position du déplacement de la filière plate (4) peut être associée à une section donnée de la fente de sortie.
